# EUROPEAN PATENT APPLICATION

(11) **EP 4 763 493 A1**
(43) Date of publication of application: **24.06.2026**
(21) Application number: 24307231.1
(22) Date of filing: 20.12.2024
(51) Int. Cl.: B29D 11/00, B29C 64/112, B33Y 10/00, B33Y 30/00, B33Y 80/00

(54) **ADDITIVE MANUFACTURING SYSTEM AND METHOD FOR PRODUCING AN OPHTHALMIC LENS ENCAPSULATING AN ELECTRONIC DEVICE**

(71) Applicant: Essilor International, 94220 Charenton-Le-Pont (FR)
(72) Inventor: BEN CHEIKH, Ilhem, 94000 CRETEIL (FR); LEITE, Pierre, 91310 MONTLHERY (FR); HUPREL, Laurent, 94140 ALFORTVILLE (FR)
(74) Representative: Jacobacci & Partners France

(57) **Abstract**

Additive manufacturing system for producing an ophthalmic lens configured for:
- depositing at least one layer of a first material on a substrate, the at least one layer having at least one first cavity,
- curing the at least one layer of the first material to a first level of the curing,
- placing the electronic device in the at least one first cavity,
- depositing at least one layer of a second material on the at least one layer of the first material,
- curing the at least one layer of the second material to a second level of the curing higher,
- depositing at least one layer of a third material on the at least one layer of the second material,
- curing the at least one layer of the third material to a third level of the curing.

## Description

### TECHNICAL FIELD OF THE INVENTION

The invention relates to an additive manufacturing system for producing an ophthalmic lens encapsulating an electronic device.

The invention also relates to an additive manufacturing method for producing an ophthalmic lens encapsulating an electronic device.

### BACKGROUND INFORMATION AND PRIOR ART

Encapsulating electronic device and optical elements within ophthalmic lenses are known. Typically, to manufacture such types of lenses, molding processes are used to integrate the electronic device into the lenses. This solution works but has several significant limitations. Indeed, the molding process can be difficult to implement because it requires mold modules which are often expensive and very bulky. In addition, this manufacturing process involves most of the time shrinkage of the material due to the internal constrains of this manufacturing process and the molding condition.

In addition, molding process involves a heat of the material at high temperature to inject the material into the mold module to form the given lens. However, most of the time, the electronic device is not protected from the heat during the injection and therefore, this lack of thermal protection can compromise the functionality and durability of the encapsulated electronic device.

In addition, positioning the electronic device in the mold module is difficult and lacks accuracy (especially due to the heat of the material during the injection). Imprecise positioning of the electronic device can result in optical aberrations and electronic malfunctions, thereby reducing the overall efficiency of the product.

### SUMMARY OF THE INVENTION

Therefore, one object of the invention is to provide an additive manufacturing system for producing an ophthalmic lens encapsulating an electronic device, the additive manufacturing system being configured for:
- depositing at least one layer of a first material on a substrate, the at least one layer having at least one first cavity arranged to receive at least a part of the electronic device,
- curing the at least one layer of the first material to a first level of the curing,
- placing the electronic device in the at least one first cavity,
- depositing at least one layer of a second material on the at least one layer of the first material,
- curing the at least one layer of the second material to a second level of the curing, the second level of the curing being higher than the first level of the curing,
- depositing at least one layer of a third material on the at least one layer of the second material, the at least one layer of the third material covering the electronic device,
- curing the at least one layer of the third material to a third level of the curing, the third level of the curing being equal to or higher than the second level of the curing.

In the present invention, the different layers are not injected by molding process but printed directly on the substrate. Therefore, the system according to the present disclosure is not expensive and not bulky as it involves 3D printing technology, for instance 3D inkjet printer. In addition, as not injection molding processes are used to manufacture the different layers (excluding the substrate), the ophthalmic lens is prevented from shrinkage of the material.

In addition, in the present disclosure, the materials are not heated to high temperature. Thus, by combining cavity, the 3D printing technology, and different levels of curing during the manufacturing process, the electronic device is protected from heat, which limits the damage on the electronic device and therefore which enhances durability of the encapsulated electronic device and the ophthalmic lens.

In addition, thanks to the cavity directly formed in the layer(s) of the ophthalmic lens, the positioning of the electronic device is easier and more accurate, improving the efficiency of the ophthalmic lens having encapsulated electronic device.

In the present disclosure, it is understood that the electronic device is directly encapsulated in the lens itself by encapsulating the electronic device in the at least one layer of the first material, in the at least one layer of the second material and in the at least one layer of the third material. Thus, in the present disclosure, the ophthalmic lens is not limited to the shape of the electronic device, allowing to use different types of electronic device and reducing the cost of the ophthalmic lens.

In an embodiment, the electronic device extends on less than 10% of an area of the substrate.

In an embodiment, the additive manufacturing system is further configured for:
- depositing at least one layer of a fourth material between an edge of the at least one layer of the first material and an edge of the substrate, the depositing being carried out before depositing the at least one layer of the second material,
- curing the fourth material to a fourth level of the curing, the fourth level of the curing being higher than the third level of the curing.

In an embodiment, the fourth material is deposited on at least one of the following layers:
- the substrate;
- the first layer at the edge;
said at least one layer of the fourth material has a shape of one of the following elements:
- a ring arranged around the extern edge of the at least one layer of the first material;
- or a shape of a frame dedicated to receive the ophthalmic lens.

In an embodiment, at least one of the following layers comprises a refractive power correction:
- the at least one layer of the first material,
- the at least one layer of the second material,
- the at least one layer of the third material,
- the substrate.

In an embodiment, the at least one layer of the first material, the at least one layer of the second material and the at least one layer of the third material have a same index of refraction.

In an embodiment,
- the first material comprises a thermoset material (for instance an acrylate resin);
- the second material comprises a thermoset material (for instance an acrylate resin);
- the third material comprises a thermoset material (for instance an acrylate resin).

In an embodiment, the at least one layer of the second material has at least one second cavity coinciding with the at least one first cavity and arranged to receive at least a part of the electronic device, the additive manufacturing system being further configured to:
- determine the volume of each cavity based on the dimension of the electronic device,
- forming the at least one first cavity during the depositing of the at least one layer of the first material and,
- forming the at least one second cavity during the depositing of the at least one layer of the second material.

In an embodiment, the additive manufacturing process is further configured for:
- depositing a fifth material in the at least one first cavity, said fifth material filling a free volume between the electrical device and at least the at least one cavity, the depositing being carried out before depositing the at least one layer of the third curable material,
- curing the fifth material during a fifth level of the curing, the fifth level of the curing being lower than the second level of the curing.

In an embodiment, the additive manufacturing system being further configured for determining a quantity of the fifth material deposited based at least on the volume of the at least one first cavity and/or the at least one second cavity and on the volume of the electronic device comprised in the at least one first cavity and /or in the at least one second cavity.

In an embodiment, the electronic device comprises a passive component.

In an embodiment, the passive component comprises a sensor comprising at least one of the following sensors:
- a time-of-flight sensor;
- an eye-tracking device.

In an embodiment, the electronic device further comprises an active component comprising a solar cell configured to power the passive component.

In an embodiment, the additive manufacturing system is configured for electrically connecting the electronic device to the edge of the substrate after placing the electronic device.

In an embodiment, the additive manufacturing system is further configured for:
- arranging an initial layer on the substrate, said initial layer being deposited before the at least one layer of the first material. This initial layer may be an adhesive layer

A further object of the invention is to provide an additive manufacturing method for producing an ophthalmic lens encapsulating an electronic device, the additive manufacturing method comprising the following steps:
- depositing at least one layer of a first material on a substrate, the at least one layer having at least one first cavity arranged to receive at least a part of the electronic device,
- curing the at least one layer of the first material at a first level of curing,
- placing the electronic device in the at least one first cavity,
- depositing at least one layer of a second material on the at least one layer of the first material,
- curing the at least one layer of the second material at a second level of curing, the second level of curing being higher than the first level of curing,
- depositing at least one layer of a third material on the at least one layer of the second material, the at least one layer of the third material covering the electronic device,
- curing the at least one layer of the third material at a third level of curing, the third level of curing being equal to or higher than the second level of curing.

In an embodiment, the additive manufacturing method further comprises the following steps:
- depositing at least one layer of a fourth material between an edge of the at least one layer of the first material and an edge of the substrate, the depositing being carried out before depositing the at least one layer of the second material,
- curing the fourth material to a fourth level of the curing, the fourth level of the curing being higher than the third level of the curing.

In an embodiment, the at least one layer of the second material has at least one second cavity coinciding with the at least one first cavity and arranged to receive at least a part of the electronic device, the additive manufacturing method further comprising the following steps:
- determining the volume of each cavity based on the dimension of the electronic device,
- forming the at least one first cavity during the depositing of the at least one layer of the first material and,
- forming the at least one second cavity during the depositing of the at least one layer of the second material.

In an embodiment, manufacturing method further comprising the following steps:
- depositing a fifth material in the at least one first cavity, said fifth material filling a free volume between the electrical device and at least the at least one cavity, the depositing being carried out before depositing the at least one layer of the third curable material,
- curing the fifth material during a fifth level of the curing, the fifth level of the curing being lower than the second level of the curing.

In an embodiment, the additive manufacturing method further comprises a step of determining a quantity of the fifth material deposited based at least on the volume of the at least one first cavity and/or of the at least one second cavity and on the volume of the electronic device comprised in the at least one first cavity and/or in the at least one second cavity.

In an embodiment, the additive manufacturing method further comprises a step of arranging an initial layer on the substrate, said initial layer being deposited before the at least one layer of the first material. This initial layer may be an adhesive layer.

A further object of the invention is to provide an ophthalmic lens comprising:
- at least one layer of a first material on a substrate,
- at least one layer of a second material on the at least one layer of the first material, said at least one layer of the first material and said at least one layer of the second material having each at least one cavity that coincides with each other,
- an electronic device in the cavity of the at least one layer of the first material and in the at least one layer of the second material,
- at least one layer of a third material on the at least one layer of the second material, the at least one layer of the third material covering the electronic device,
- optionally, at least one layer of a fourth material between an edge of the at least one layer of the first material and an edge of the substrate,
- optionally, a fifth material in the at least one cavity of the at least one layer of the first material and in the at least one cavity of the at least one layer of the second material, said fifth material filling a free volume between the electrical device and the at least one cavity of the at least one layer of the first material and the at least one cavity of the at least one layer of the second material.

In this embodiment, the ophthalmic lens may comprise an initial layer between the first layer and the substrate. This initial layer may be an adhesive layer.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a schematic representation of a system according to the present disclosure;
- Figure 2 shows a schematic representation of an additive manufacturing process according to the present disclosure;
- Figure 3 shows a schematic representation of an ophthalmic lens according to the present disclosure in axial cut view, this ophthalmic lens being obtained in a step of depositing at least one layer of a first material of the additive manufacturing process illustrated in figure 2;
- Figure 4 shows a front view of the ophthalmic lens of figure 3 in a front view, when projected into a facial plane perpendicular to the optical axis;
- Figure 5 shows a schematic representation of an ophthalmic lens according to the present disclosure in axial cut view, this ophthalmic lens being obtained in a step of placing of the additive manufacturing process illustrated in figure 2;
- Figure 6 shows a front view of the ophthalmic lens of figure 5 in a front view, when projected into a facial plane perpendicular to the optical axis;
- Figure 7 shows a schematic representation of an ophthalmic lens according to the present disclosure in axial cut view, this ophthalmic lens being obtained in a step of depositing at least one layer of a fourth material of the additive manufacturing process illustrated in figure 2;
- Figure 8 shows a front view of the ophthalmic lens of figure 7 in a front view, when projected into a facial plane perpendicular to the optical axis;
- Figure 9 shows a front view of an ophthalmic lens according to the present disclosure, this ophthalmic lens being obtained in a step of depositing at least one layer of a second material of the additive manufacturing process illustrated in figure 2;
- Figure 10 shows a schematic representation of an ophthalmic lens according to the present disclosure in an axial cut view, this ophthalmic lens being obtained in a step of depositing at least one layer of a fifth material of the additive manufacturing process illustrated in figure 2;
- Figure 11 shows a schematic representation of an ophthalmic lens according to the present disclosure in axial cut view, this ophthalmic lens being obtained in a step of depositing at least one layer of a third material of the additive manufacturing process illustrated in figure 2;
- Figure 12 shows a front view of the ophthalmic lens of figure 11 in a front view, when projected into a facial plane perpendicular to the optical axis;
- Figure 13 shows an example of the different levels of curing of the ophthalmic lens according to the present disclosure.

### Ophthalmic lens

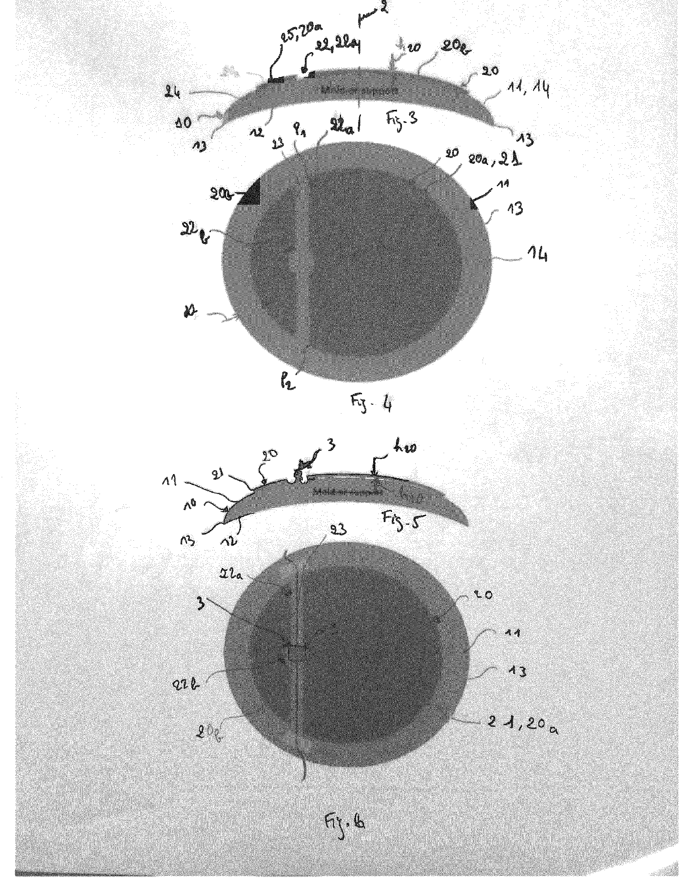

It will be described with reference to figures 3-12 an ophthalmic lens according to the present disclosure.

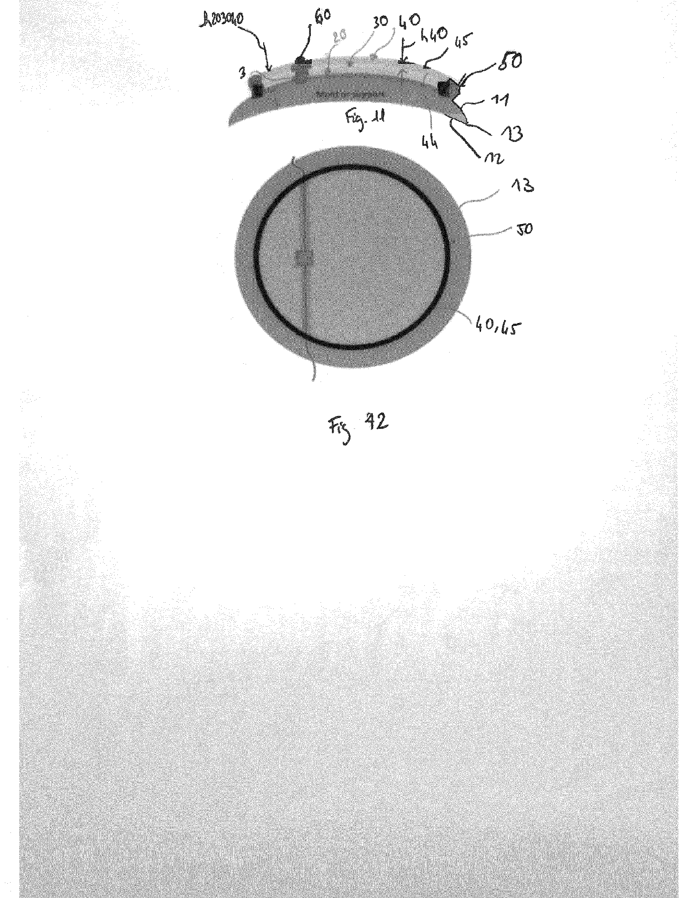

Figure 11 and figure 12 show an example of an ophthalmic lens 1 according to the present disclosure.

The ophthalmic lens 1 comprises a substrate 10.

The substrate 10 of the ophthalmic lens illustrated in figure 11 has two opposite optical faces, a front face 11 directed towards an object side and a rear face 12 that may be closest to an eye of a wearer, and an edge 13 connecting the front face 11 and the rear face 12 of the substrate 10.

In an embodiment, the substrate may comprise an arrangement of micro-optical elements (not shown) arranged on at least one of the front and rear faces of the lens, preferably the convex front face of the substrate or into the substrate.

In the present disclosure, the substrate 10 may comprise a refractive power correction. By refractive power correction, it is meant that the element having this refractive power correction is adapted to the vision of an individual (i.e. a wearer).

In the present disclosure, the refractive power correction comprises a spherical component and a cylindrical component.

The substrate may comprise at least one of the following material: polycarbonate, Epoxy resin, Acrylic Polymers (for instance polymethyl methacrylate (PMMA). The substrate may also comprise at least one of one of a thermoplastic resin or a thermoset resin.

In the present disclosure, the thermoplastic resin may be selected from the group consisting of (or may be chosen from the following options): polymethylmethacrylate, polyamide polycarbonate, polycarbonate/polyester blends, polyester, cyclic olefin copolymers, polyurethane, polysulfone, and combinations thereof.

In the present disclosure, the thermoset resin may be selected from the group consisting of (or may be chosen from the following options): a diethylene glycol bis(allyl carbonate), allylic and (meth)acrylic copolymers, a polythiourethane, a polyurethane, or a polyurea. In particular, a diethylene glycol bis(allyl carbonate), such as CR39^{®}, with a refractive index of 1.5, sold by PPG Industries to make thermoset plastics, allylic and (meth)acrylic copolymers, having a refractive index between 1,54 and 1,58, a polythiourethane, such as MR series provided by Mitsui Chemicals: MR6^{®}, MR7^{®}, MR8^{®}, MR10^{®}, MR174^{®}, a polyurethane (Trivex ^{®} / NXT ^{®}) are suitable materials.

As it will be described below, the ophthalmic lens 1 comprises additional layers, here at least one layer 20 of a first material, at least one layer 30 of a second material, at least one layer 40 of a third material, and optionally at least one layer 50 of a fourth material and/or at least one layer 60 of a fifth material and optionally an initial layer (not shown). This initial layer may be an adhesive layer positioned between the first layer 20 and the substrate 10.

In the example of figure 11 or in figure 12, the ophthalmic lens 1 comprises the at least one layer 20 of a first material. In the following, this at least one layer 20 (here a single layer) of a first material is called first layer 20. As shown in figure 11, the first layer 20 is directly positioned on the front face 11 of the substrate.

This first layer 20 covers a part of the front face of substrate 10. Typically, here, the first layer 20 comprises an external outline 21, here a circular outline 21, which is spaced from the edge 13 of the substrate 10 from a distance d1 (here evaluated in the projection plane). In the present disclosure, the distance d1 between the external outline 21 of the first layer 20 and the edge 13 of the substrate defines a peripheral zone 14 of the substrate. In practice, this peripheral zone 14 of the substrate 10 is arranged to fix the substrate 10 in a frame (not shown). Thus, it is understood, that this distance d1 is adapted to fix the ophthalmic lens 1 to a frame of a spectacle.

In addition, this first layer 20 comprises an intern outline 23 delimiting at least one cavity 22 (here a single cavity 22 denoted first cavity 22). In this embodiment, the first cavity 22 is arranged in a through manner across the entire thickness of the first layer 20 (described below). The first cavity (or empty space) is designed to completely traverse the thickness of the first layer 20. In other words, the first cavity 22 corresponds to an empty space or a hole in the first layer 20.

The first cavity divides the first layer 20 into two distinct parts, a left part 20a and a right part 20b and delineates a volume arranged to receive at least a part of the electronic device 3.

The first cavity 22 extends over a transverse length of the first layer 20. Here, this first cavity 22 is in two parts: a first part 22a and a second part 22b.

The first part 22a has a shape of a groove on the surface of the substrate 10 and extends between two points P1, P2 located at two opposite positions on the external outline 21 of the first layer 20. Here, the first part 22a (the groove) has a thickness ranging from 0.2 mm and 0.5 mm and is arranged to receive electric wire(s) to connect the encapsulated electronic device 3 to other electronic devices of the ophthalmic lens 1 and/or other electronic devices comprised in a frame of a spectacle. The thickness of the groove may depend on the thickness of the electronic device.

The second part 22b of the cavity 22b has a shape that is adapted to the electronic device 3, for instance to arrange the electronic device 3 in the second part 22b of the first cavity 22. Typically, here, the second part 22b has a rectangular shape delineates a volume arranged to receive the electronic device 3.

In figure 5 and in figure 6, it can be seen that the first cavity 22 has dimensions (length and width of the second part 22b) in the facial plane that are higher than dimensions (length and width) of the electronic device 3 defined in the facial plane. Thus, when the electronic device 3 is arranged in the first cavity 22, there is a free volume between the border of the electronic device 3 and the interne outline 23 of the first layer 20. This free volume allows protecting the electronic device 3 from the temperature of the first material during the deposition of the first layer 20 and/or during the cure of the first material during the curing process of the first layer 20.

The first layer 20 has a maximum height h20 (or thickness) defined between a face 24 of the first layer 20 oriented toward the substrate 10 and a face 25 of the first layer 20 oriented toward the environment (opposed to the face 24). In figure 5, it can be seen that the first layer has a constant thickness along its surface (i.e. approximately the same height between the bottom face 24 and the top face 55 of the first layer 20). It can also be seen that the maximum height h20 of the first layer 20 is lower than a maximum height h3 of the electronic device 3, said maximum height h3 of the electronic device being defined between a face 3a of electronic device 3 oriented toward the substrate 10 and a face 3b of the electronic device 3 oriented toward the environment (opposed to the face 3a). In practice, this maximum height h20 corresponds to the thickness of the first layer 20 and thus depends on the parameters of the deposition of the first layer 20.

In practice, the maximum height of the first layer 20 is lower or equal to the half of the maximum height h3 of the electronic device 3.

The electrical device 3 is arranged in the first cavity 22, in particular in the second part 22b of the first cavity 22. In the present disclosure, the electronic device 3 comprises a passive component. For instance, this passive component may comprise a time-of-flight sensor arranged to detect object in the environment of the subject wearing the ophthalmic lens 1 and to measure the distance between the ophthalmic lens 1 and the given detected object and/or to measure the depth of the given detected object. To this end, this time-of-flight sensor may comprise a light, for example an infrared light, arranged to emit a wave toward the environment so as to use light to measure time of ***light.***

This type of passive component may be used in an Augmented Reality (AR) device and/or in a Virtual Reality (VR) device.

For augmented reality device, the time-of-flight sensor may be arranged to determine depth maps (for instance in real time) and thus may be arranged to place virtual object in a given scene displayed on the display of the augmented reality device or in the display of the virtual reality device.

For virtual reality device, the time-of-flight sensor may be arranged to detect objects in the real space, for instance to avoid collision.

Alternatively or in combination, the passive component may comprise an eye-tracking device arranged to track eye movement of the subject wearing the ophthalmic lens and to determine a gaze direction of the subject. Typically, this eye-tracking device may comprise an infrared camera to tack reflections on the cornea and/or the pupil of the subject.

This type of passive component may be used in an Augmented Reality (AR) device and/or in a Virtual Reality (VR) device.

For instance, this eye-tracking device may be used to control interface using the gaze direction of the subject, when the subject is looking at a specific element. Additionally or alternatively, the subject may select virtual object or navigate in file by looking at the direction of an icon associated with this file. Additionally or alternatively, the gaze direction may be used to adjust a resolution and/or the focus and/or the render of a given scene that is displayed. It may also be used to adjust the render and the brightness of a display image, to limit visual fatigue of the subject.

Optionally, the electronic device 3 comprises an active component electrically connected to the passive component. This active component comprises, for instance, a solar cell configured to power the passive component, allowing to obtain an autonomous electronic device 3. In practice, this active component is arranged in the same cavity as the passive component, thus here in the second part 22b of the first cavity 22.

In the present disclosure, each cavity (continuous cavity) of the first layer 20 is associated to an electronic device 3. Thus, it is understood that the ophthalmic lens 1 according to the present disclosure can comprise several electronic devices 3 encapsulated in different cavities. In this latter case, there are as many first cavities 22 as there are electronic devices 3. Then, the shape of each cavity depends on the electronic device 3 positioned into this given cavity. Thus, it is understood that the second part 22 of the first cavity 22 can have other shapes, for instance a circular shape, etc.

The ophthalmic lens 1 comprises the at least one layer 50 of the fourth material, which is positioned between an edge of the first layer 20 and the edge of the substrate 10. In the following, this at least one layer 50 (here a single layer) of the third material is called fourth layer 50 and is arranged on at least one of the following elements: the substrate 10; the first layer, for instance, at an edge of the first layer 20. Typically here, it can be seen that a part of this fourth layer 50 is positioned on the external outline 21 of the first layer 20 and on a part of the substrate 10 that is close to the external outline 21 of the first layer 20.

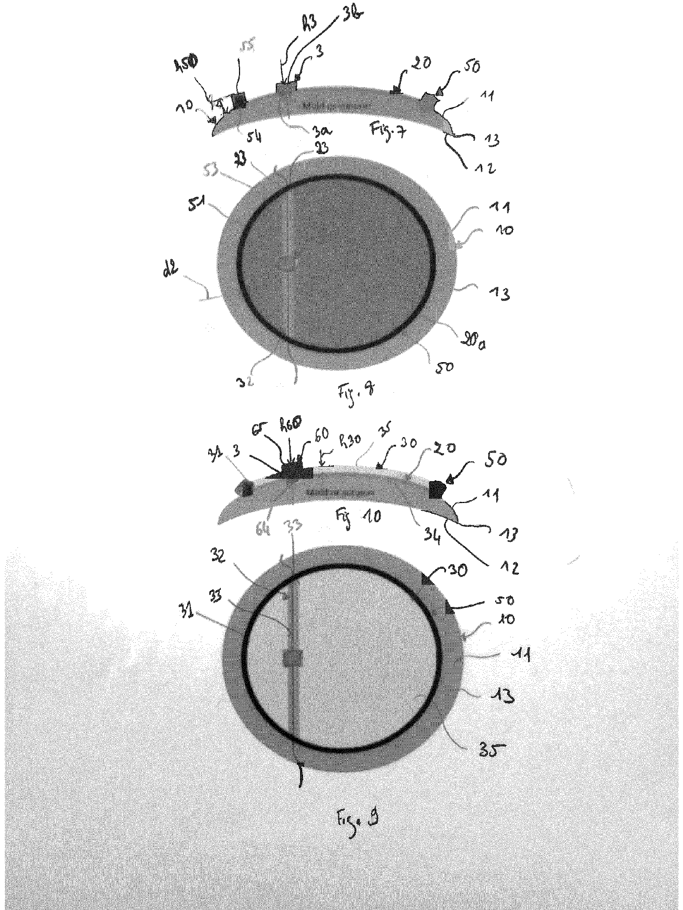

This fourth layer 50 has a shape that is adapted to the shape of the ophthalmic lens 1 (or the substrate 10) selected to be mounted in a given frame. Thus, is it understood that the shape of the substrate 10 depends on the shape of the frame arranged to receive the ophthalmic lens 1. In figure 8, the fourth layer 50 has a ring shape positioned around the first layer 20 and has, for instance, a size d2 between its external outline 51 (or external edge) and its internal outline 53 (or internal edge) comprised between 1 mm and 5 mm, preferably between 1 mm and 2 mm. In practice, the fourth layer 50 acts as a holding element of the different layers that are deposited by the additive manufacturing process according to the invention. This avoids leakage of the different materials of the ophthalmic lens 1.

In practice, the fourth layer 50 has a maximum height h50 (or thickness) defined between a face 54 of the fourth layer 50 oriented toward the substrate 10 and a face 55 of the fourth layer 50 oriented toward the environment (opposed to the face 54). The value of the maximum height h50 depends on the number of layers encapsulating the electronic device 3 (thus to the number of layers having cavities to position the electronic device 3 into these cavities). Typically, as shown in figure 11, the maximum height h50 of the fourth layer 50 is higher than a maximum height h203040 defined by the combination of the maximum height h20 of the first layer 20, a maximum height of the at least one layer 30 of the second material and a maximum height of the at least one layer 40 of the third material

In figure 7, it can be seen that the fourth layer 50 has a constant thickness along its surface (i.e. approximately the same height between the bottom face 54 and the top face 55 of the fourth layer 50).

The ophthalmic lens 1 further comprises the at least one layer 30 of a second material. In the present disclosure, the at least one layer 30 of a second material is arranged on the first layer 10, here between the first layer 20 and the at least one layer 40 of a third material.

In the following, this at least one layer 30 (here a single layer) of the second material) is called second layer 30. The second layer 30 is arranged to cover at least 80 % of the surface first layer 20 (typically here at least 90 % of the surface of the first layer 20 that is not covered by another layer). As shown in figures 10-11, this second layer 20 is only deposited on the first layer 20 and has thus the same shape as the first layer 20.

As shown in figure 10, the second layer 30 has a maximum height h30 (or thickness) defined between a face 34 of the second layer 30 oriented toward the substrate 10 and a face 35 of the second layer 30 oriented toward the environment (opposed to the face 54). The value of the maximum height h30 depends on the thickness of the second layer 30 printed by the process according to the present disclosure. In figure 10, it can be seen that the second layer 30 has a constant thickness along its surface (i.e. approximately the same height between the bottom face 34 and the top face 35 of the second layer 30).

In practice, the maximum height of the second layer 30 is higher or equal to the half of the maximum height h3 of the electronic device 3 but stays lower than the maximum height h3 of the electronic device 3.

Typically here, it can be seen that the second layer 30 is arranged to fully cover the first layer 20 and not the first cavity 22.

The at least one layer 30 of the second material has at least one cavity 32 (called second cavity 32) arranged to receive at least a part of the electronic device 3.

In this embodiment, the second cavity 32 is arranged in a through manner across the entire thickness (height h30) of the second layer 30. In other words, the second cavity 32 corresponds to an empty space or a hole in the second layer 30.

Preferably, this second cavity 32 coincides with the first cavity 22 of the at least one layer 20 of the first material. Thus, this second cavity 32 has a same shape as the first cavity 22 and is arranged to receive at least one part of the electronic device 3 that is not encapsulated by the first layer 20. This second layer 30 has an external outline 31 in contact with the fourth layer 50 and an internal outline 33, which coincides with the internal outline 23 of the first layer 20 and which defines the second cavity 32.

Thus, it means that the second cavity 32 overlaps the first cavity 22 and contributes to form a total cavity associated to the electronic device 3. In the present disclosure, this total cavity results of the combination of the volume of the first cavity 22 and the second cavity 32, and thus provides a continuity between the volume delimiting by the first cavity 22 and the second cavity 32. In the present disclosure, the total cavity has a maximum height h2030 (corresponding here to the maximum height resulting from the combination of the maximum height h20 of first layer and the maximum height h30 of the second layer 30) defined between a bottom face of the first layer 10 (e.g. face 24) and a top surface of the second layer 30 (here face 35). This maximum height h2030 is higher than the maximum height h3 of the electronic device 3. Therefore, the first layer 20 and the second layer 30 are arranged to encapsulate the electronic device 3.

In reference to figure 9, it can be seen that the second layer 30 has an external outline 31, which coincides with the internal edge 53 of the fourth layer 50. Thus, the second layer 30 does not cover the fourth layer 50. The second layer 30 is maintained by the fourth layer 50.

The ophthalmic lens 1 further comprises the at least one layer 60 of a fifth material (hereafter called fifth layer 60). In the present disclosure, the fifth layer 60 is positioned in the different cavities of the ophthalmic lens 1 arranged to receive a part of the electronic device 3.

In figure 10, it can be seen that the fifth layer 60 is further arranged to cover all the parts of the electronic device 3. Thus, here, it is understood that the fifth material is arranged to fill the free volume of the first cavity 22 and the second cavity 32 (e.g. a volume of the total cavity not filled by a part of the electronic device 3).

The fifth layer 60 has a maximum height h60 defined between a face 64 of the fifth layer 60 oriented toward the substrate 10 and a face 65 of the fifth layer 60 oriented toward the environment (opposed to the face 64). This maximum height h60 is higher than the maximum height h2030 corresponding to the combination of the maximum height of the first cavity and the maximum height of the second cavity. This provides a first protection (e.g. protecting layer) to the electronic device 3 to avoid damage.

As shown in figure 10, the fifth layer 60 may be arranged to cover a part of the second layer 30. This arrangement is advantageous to allow capillarity effect between both materials. Typically here, it can be seen that the fifth layer 60 covers a part of the second layer 30 that is positioned around the second cavity 32.

The ophthalmic lens 1 further comprises the at least one layer 40 of the third material (single layer hereafter called third layer 40). This third layer 40 is arranged on the second layer 30. As shown in figure 11, the third layer 40 is arranged to cover (at least) the second layer 30. In practice, this third layer 40 is arranged to cover at least 80 % (here at least 90 %) of the surface of the second layer 30 corresponding to the surface of the face 35.

The third layer 40 has a maximum height h40 defined between a face 44 of the third layer 40 oriented toward the substrate 10 and a face 45 of the third layer 40 oriented toward the environment (opposed to the face 44). For example, the maximum height h44 is comprised between 1 mm and 5 mm.

In figure 11, it can be seen that the third layer 40 has a constant thickness along its surface (i.e. approximately the same height between the bottom face 44 and the top face 45 of the third layer 40).

In addition, this third layer 30 is arranged to cover a part of the fifth layer 60 that covers a part of the second layer 30. Thus, the third layer acts as a protective layer of the ophthalmic lens 1. Therefore, with the combination of the first layer 20, the second layer 30, the third layer 40 and optionally the fifth layer 60, the electronic device 3 is fully encapsulated into the ophthalmic lens 1.

However, this third layer 40 does not cover the fourth layer 50. Thus, the maximum height h40 of the fourth layer 40 is higher than the combination of the maximum height h20 of the first layer 20, the maximum height h30 of the second layer 30 and the maximum height h40 of the third layer 40. The fourth layer thus maintains the different layers that encapsulated the electronic device 3.

In the present disclosure, the ophthalmic lens 1 may be a corrective lens as described above. In that case, at least one of the following layers comprises a refractive power correction:
- the at least one layer of the first material,
- the at least one layer of the second material,
- the at least one layer of the third material,
- the substrate.

Preferably, the substrate 10 comprises a refractive power correction. However, if several layers described above have refractive power correction, it is understood that the refractive power correction is similar for all the layers having a corrective function.

In one embodiment, the first material, the second material, the third material, optionally the fifth material and/or the fourth material are of a same material, for instance a resin material.

In the present disclosure, the first material, the second material, the third material, optionally the fifth material and/or the fourth material is selected among thermoset material. For instance, they comprise a thermoset material such as acrylate resin (as described above, for instance Methyl methacrylate (MMA) resin and/or Modified acrylic resins). The acrylate resin may have different formulations for instance Resin 39.

In practice, the fourth material may differ from the first material, the second material, the third material, optionally the fifth material as this fourth material is often mounted on the frame of a spectacle that comprises the ophthalmic lens according to the present disclosure. In one embodiment all the layers are made of an acrylate resin and the fourth material is made of a specific formulation of acrylic resin.

Thus, it means that the ophthalmic lens according to the present disclosure can encapsulate the electronic device 3 in two layers of a same material but having a different level of curing as it will be described below.

In one embodiment, the first material, the second material, the third material, optionally the fifth material have optical properties. To this end, these layers may comprise at least one of the following elements:
- at least one photochromic dye, for instance naphthopyra,
- at least one ultraviolet absorber additive (for instance UV400),
- at least one IR absorber additive,
- at least one wetting agents,
- a polyvinyl alcohol (to have polarizing function), etc.

In an embodiment, the first layer 20, the second layer 30 and the third layer 40 and, optionally the fifth layer 60 and/or fourth 50 have a same index of refraction to avoid any optical disturbance. In practice, the fourth layer 50 may have a different index of refraction of the index of refraction of the first layer 20, of the index of refraction of the first layer 20, of the index of refraction of the second layer 30 of the third layer 40 and of the index of refraction of the fifth layer 60 as the fourth layer is most of the time covered by the frame of the spectacle. Therefore, in a preferred embodiment, the first layer first 20, the second layer 30, the third layer 40 and fifth layer 60 have a same refractive index to improve the optical properties of the ophthalmic lens 1.

However, it is understood that the refractive index of these layers may differ from the refractive index of the substrate 10.

In practice, the substrate 10 of the ophthalmic lens 1 has a high refractive index. By high refractive index, it is meant an index of refraction higher than or equal to 1,55 (at a temperature of 21°C). In practice, the index of refraction of the substrate is comprised between 1.5 and 1.74, for example between 1,56 and 1,6.

In an embodiment, the first layer 20, the second layer 30 and the third layer 40 and, optionally the fifth layer 60 and/or fourth 50 have each a refractive index (preferably similar for the first layer, second layer, third layer and the fifth layer) that differs from the index of refraction of the substrate. In practice, as explained above, the substrate has a high index of refraction whereas the first layer 20, the second layer 30 and the third layer 40 and, optionally the fifth layer 60 and/or fourth 50 have a low index of refraction (i.e. an index of refraction lower than 1,5), for instance comprised between 1,50 and 1,54.

To avoid a high modification of the reflection of light, the first layer 20, the second layer 30, the third layer 30 and optionally the fifth layer 60 have preferably an index of refraction that is close to the index of refraction of the substrate 10. By close, it is meant an index of refraction that differs (in absolute value) by less than 0,5, preferably by less than 0,1.

In this embodiment, the ophthalmic lens 1 may comprise an initial layer positioned between the first layer 20 and the substrate 10.

In the present disclosure, the ophthalmic lens described above is produced by a system according to the present disclosure that will be described below.

In an embodiment, it is understood that the ophthalmic lens 1 may only comprise the first layer 20, the second layer 30 and the third layer 40. Indeed, the third layer covers the first and the second cavities of the ophthalmic lens 1. Thus the third layer 40 acts as a first protective layer.

### System

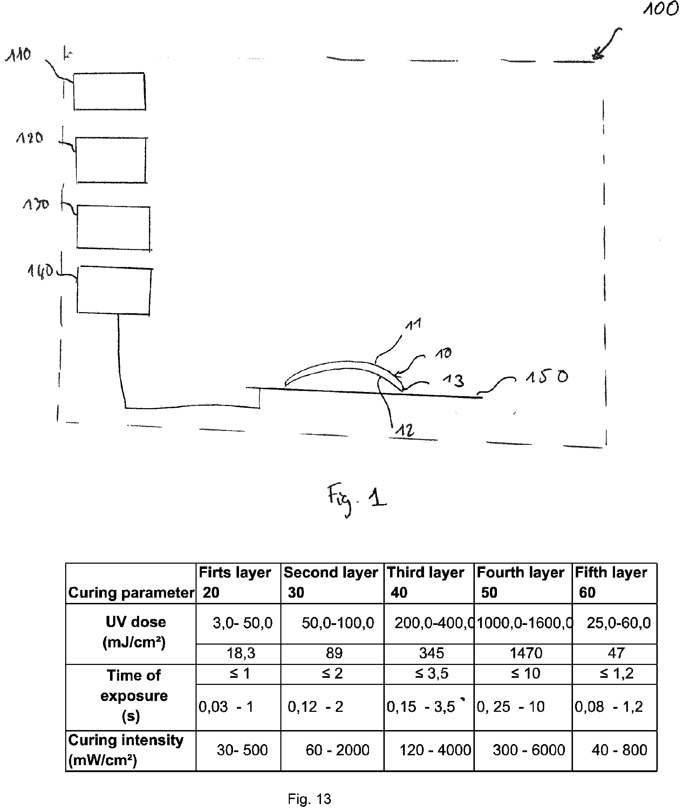

Figure 1 shows an example of an additive manufacturing system 100 for producing an ophthalmic lens 1 according to the present disclosure.

In the present disclosure, by "additive manufacturing system for producing an ophthalmic lens", it is meant a system that is used in combination with another system that produces the ophthalmic lens. In particular, here, as it will be disclosed below, the substrate 10 of the ophthalmic lens 1 may be produced by another system, for instance by injection molding in a system having injection mold, or by compression molding, or by cast molding, etc.

Thus, it is understood that in the following, the substrate 10 of the ophthalmic lens 1 is provided to the system 100 described below.

The additive manufacturing system 100 according to the present disclosure comprises a control unit 110, a depositing device 120, a curing device 130, an optional a movable arm 140. In figure 1, it can be seen that the substrate is arranged on platform 150 of the system 100. The plateform 150 can be movable along x, y, z directions.

In the present disclosure, the control unit 110 is a computer or any other electronic element that can be used to implement a succession of commands and/or calculations. The control unit 110 typically comprises a processor, memory and various input and output interfaces.

Thanks to its input and output interfaces, the control unit 110 is suitable for receiving input data, e.g. setup data, a pattern to be made, the type of substrate used, a thickness of a given material, etc. To this end, the control unit 110 is typically connected to a human-machine interface (HMI) allowing an user to enter the input data that will be used, for instance, by the depositing device 120 to deposit the given material on the substrate 10 of the ophthalmic lens 1 and/or by the curing device 130 to cure the given material.

The output data correspond to the commands sent to the various elements of the system 100.

For the depositing device 120, these commands comprise, for example, data for the setting of the depositing device 120 (e.g. operating mode, type of material, number of layers, thickness of a given layer, scanning speed, layer order (or material order) to be deposited, cavity and number of cavities, etc.).

For the curing device 130, these data include, for example, parameters relative to the curing level comprising at least one of the following parameters : a curing dose, curing intensity (corresponding here to the intensity of the light source used for the curing), curing power (corresponding to the power of the light source used for the curing), curing time (corresponding here to the exposure time of a given layer to the light of the curing device), curing velocity, type of light, curing light dose (corresponding here to the curing time x curing intensity).

In the additive manufacturing system 100 according to the present disclosure, the depositing device 120 is arranged to deposit at least one layer of a given material on the substrate, for instance on the rear 12 or front 11 face of the substrate 10 described above.

In the present disclosure, by depositing a given layer of a given material, it is meant printing the given layer of the given material, for instance by 3D printing process.

To this end, the depositing device 120 according to the present disclosure comprises a 3D inkjet printer 10, for instance the N-Jet 3D from the company Notion System arranged to print the given layer of the given material. Thus, it is understood that this depositing device 120 enables to deposit different materials (for instance those described above) by 3D printing (directly or indirectly on the substrate 10).

In the present disclosure, the additive manufacturing system 100 is configured for depositing different layers of the ophthalmic lens 1 in a predefined order. This order is preferably the following: first the first layer 20, optionally the fourth layer 40, the second layer 30, optionally the fifth layer 60, and the third layer 40. In practice, this order may be configured by an user via the humane-machine interface as input data as described above, preferably before depositing the first layer 20. In that case, the additive manufacturing system (here the control unit) is configured to detect the order according to the layers need to be positing and to deposit the different layers of the ophthalmic lens 1 according to the detected order.

In the present disclosure, the depositing device 120 comprises a heat nozzle comprising a heating device to heat the material that is deposited by the depositing device 120 and a motor to push the material toward the orifice. Typically, the material provided to the depositing device is in a solid state and the heating device 120 is configured to heat the material so that the given material is enough fluid to be extruded by an orifice of the nozzle. However, it is understood that the material that is printed by the depositing device 120 is heated to low temperature (for instance lower than 60°C).

In the present disclosure, the nozzle is movable via its motor. The nozzle is arranged to scan a surface (here the front surface of a given layer oriented toward the environment) of a given layer to deposit the given material on this surface of this layer.

The depositing device 120 is configured to deposit the given material on a surface of a given layer according to at least two dimensions x, y transverse to the optical axis 2 of the ophthalmic lens 1 (oriented along z axis).

Typically, the depositing of a given material may be made linearly by scanning via the movable nozzle each portion of the surface of the layer (in which a material needs to be deposited) along a (fictitious) line defined on the given layer and then moving the nozzle on another line by moving along the y-axis so as to achieve a two-dimensional (x,y) scan of a portion of layer. Of course, other modes of scan may be configured, such as a y-axis inline scan and then an x-axis scan to perform the two-dimensional scan (x, y) or vector scans known to the skilled person.

In one embodiment, the depositing device 120, in particular the nozzle, is configured to pass n times over each portion of the surface of a given layer, with n an integer greater than or equal to 1. Typically, n corresponds to the number of passes of nozzle on the portion of the given layer.

As specified above, when n is equal to 1, a single pass is made by the nozzle. In that case, the thickness of the given layer of the given material corresponds to a size of a voxel of the depositing device 120. Input data may comprise the thickness of the given layer that corresponds here to the size of the voxel according to a third spatial coordinate z. The thickness of the given layer is thus determined by the quantity of material deposited by the depositing device 120. In practice, in that case, the 3D inkjet printer is based on the Fused Deposition Modeling technology (FDM). FDM technology allows the use of materials that are thermally sensitive.

In a variant, n is an integer greater than or equal to 2. Therefore here, the depositing device is configured to pass different times on a same position in the surface of the given layer (previously deposited or previously provided). In that case, there is a scan according to the spatial dimension z oriented parallel to the optical axis of the ophthalmic lens 1. Here, it is understood that the number of passes may depend on the thickness of the given material to be deposited. Therefore, in this embodiment, the depositing device 120 is configured to repeat several times the depositing process of the given material to achieve the desired layer thickness. Typically, in that case, the size of the voxels associated with the depositing device 120 is predetermined. In the present disclosure, the thickness of a given layer corresponds to the maximum high of this given layer.

As explained above, the first layer 20 has at least one first cavity 22 and the second layer 30 has at least one second cavity 32.

The additive manufacturing system 100 is configured to detect data relative to the size (or dimensions) of the electronic device 3 and determine the volume of each cavity (here the first cavity 22 and the second cavity 32) based on the data relative to the size of the electronic device 3. Here, by detecting, it is meant that the data relative to the size may be manually entered, for instance as input data via the IHM, or automatically detected by selecting, in a database, the electronic device 3.

Here, the size of the electronic device 3 corresponds to all the parameters of the electronic device 3 allowing to form the shape of the first cavity 22 and the second cavity 32. Typically, the size of the electronic device 3 comprises at least a maximum length, a maximum width and a maximum height. The control unit is configured to determine of model of the electronic device 3 based on a shape of the electronic device 3 and its dimensions (preferably based on a maximum length, a maximum width and a maximum depth of the electronic device extracted from technical data relative to the electronic device 3). For instance, the electronic device 3 may be associated to a rectangular shape and thus the model of the electronic device 3 may be associated to a rectangular volume. In an embodiment, the length and width (defined in the projection plane) of the first cavity is selected so that the outline of the first cavity (corresponding to the outline 23) is spaced from the electronic device 3 (its border) from at least 0.5mm for example from at least 1 mm. Same applies to the second cavity.

In addition, the height of the first cavity corresponds to the maximum height h20 of the first layer 20 and the height of the second cavity corresponds to the maximum height h30 of the second layer 30. As the maximum heights h20 and h30 depend on the maximum height of the electronic device 3, it is possible to determine the size of each cavity.

In addition, the position of the first cavity 22 and the second cavity 32 depends on the position of the electronic device 3. Thus, the additive manufacturing system 100 (here the control unit 110) is configured to adapt the position of the given cavity to the electronic device 3.

In practice, the combination of the volume of the first cavity and the volume of the second cavity 32 (hereafter called volume of the total cavity) is higher than a volume of the electronic device 3. Thus, the control unit 110 first detects the position of the electronic device 3 and the size of the electronic device 3 and then determines the position and the volume of the first cavity and the second cavity so that the volume of the total cavity is k higher than the volume of the electronic device 3, with k an integer higher than 1.

After determining the volume of each cavity, the additive manufacturing system 100 is configured to create the given cavity during the depositing of the given layer of the given material. In practice, when a cavity needs to be formed, the depositing device 120 is configured to not deposit a given material at this given position during the deposition of the given layer.

After depositing a given layer of a given material, the additive manufacturing system 100 is configured to cure the given material to a given level of curing via the curing device 130. It is understood that in the present disclosure, each step of depositing is associated to a step of curing.

In practice, this curing device 130 is connected to control unit 110 and comprises UV light source, for instance UV Led bar, laser scanning system, etc..

In the present disclosure, each curing level is associated with at least one value of a curing parameter and/or is related to a conversion rate of the material. Typically, here, the curing parameter comprises at least one of the following elements: a curing dose (corresponding here to an UV dose), a curing intensity, a curing power, a curing time and a curing velocity, a curing light dose (time of lighting x light intensity)

Thus, the term "by level of curing" means at least one value of the parameter of curing described above.

Therefore, here, the curing device is configured to:
- cure the at least one layer of the first material to a first level of the curing after the depositing of the least one layer of the first material,
- cure the at least one layer of the second material to a second level of the curing after the depositing of the least one layer of the second material,
- cure the at least one layer of the third material to a third of the curing after the depositing of the least one layer of the third material,
- cure the at least one layer of the fourth material to a fourth level of the curing after the depositing of the least one layer of the fourth material,
- cure the at least one layer of the fifth material to a fifth level of the curing after the depositing of the least one layer of the fifth material.

In practice, the curing of a given layer occurs after successively depositing (entirely) the given layer, for instance after a time period that depends on the activation of the curing device 130 and/or the stabilisation of the curing device 130. In practice, this time period is lower than 5 seconds. Therefore, it means that the system 100 is configured to deposit and to cure a given layer of a given material before depositing a new layer of a given material cured at a different level of curing.

Preferably, in the present disclosure, the level of curing depends on the properties of the given material to be cured. For example, it depends on at least one of the following elements: the type of material of the given layer, on the thickness of the given material, the position of the given layer, etc.

Figure 13 shows an example of the different levels of curing of the different layers of the ophthalmic lens 1. In this example, the levels of curing of the different layers comprise here three parameters of curing: the UV dose, curing time (or time of exposure), and the curing intensity.

In this example, the curing time of the first layer 20 is lower than or equal to 31 seconds (s), for instance comprised between 0,03 s and 1 s. The curing time of the second layer 30 is lower than or equal to 2 s, for instance comprised between 0,12 s and 2 s. The curing time of the third layer 40 is lower than or equal to 3,5 s, for instance comprised between 0,15 s and 3,5 s. The curing time of the fourth layer 50 is lower than or equal to 10 s, for instance comprised between 0,25 s and 10 s. The curing time of the fifth layer 60 is lower than or equal to 1,2 s, for instance comprised between 0,08 s and 1,2 s.

In this example, the UV dose of the first layer 20 is lower than or equal to 50 mJ/cm², for instance comprised between 3 mJ/cm² and 50 mJ/cm². The UV dose of the second layer 30 is lower than or equal to 100 mJ/cm², for instance comprised between 50 mJ/cm² s and 100 mJ/cm². The UV dose of the third layer 40 is lower than or equal to 400 mJ/cm², for instance comprised between 200 mJ/cm² and 400 mJ/cm². The UV dose of the fourth layer 50 is lower than or equal to 1600 mJ/cm², for instance comprised between 1000 mJ/cm² and 1600 mJ/cm². The UV dose of the fifth layer 60 is lower than or equal to 60 mJ/cm², for instance comprised between 25 mJ/cm² and 60 mJ/cm².

In this example, the curing intensity of the first layer 20 is lower than or equal to 500 mW/cm², for instance comprised between 30 mW/cm² and 500 mW/cm². The curing intensity of the second layer 30 is lower than or equal to 2000 mW/cm², for instance comprised between 60 mW/cm² s and 2000 mW/cm². The curing intensity of the third layer 40 is lower than or equal to 4000 mW/cm², for instance comprised between 120 mW/cm² and 4000 mW/cm². The curing intensity of the fourth layer 50 is lower than or equal to 6000 mW/cm², for instance comprised between 300 mW/cm² and 6000 mW/cm². The curing intensity of the fifth layer 60 is lower than or equal to 800 mW/cm², for instance comprised between 40 mW/cm² and 800 mW/cm².

It can be seen that the UV dose of the second layer is higher than the UV dose of the first layer. In addition, UV dose of the third layer is higher than the UV dose of the second layer. The different levels of curing, representing by the UV dose, are determined in order to find the best compromise between geometry, coalescence of resin and hold of the electronic device. However, it can be seen that the UV dose of the fourth layer is higher than the UV dose of the third layer. It can be seen that the UV dose of the fifth layer is lower than the UV dose of the second layer.

The same comparisons can be seen with the curing parameter associated with the curing intensity and the time of exposure.

Thus, in the present disclosure, the first level of curing is lower than the second level of curing, the third level of curing, the fourth level of curing and the fifth level of curing. The low level of curing is important to let a good flexibility to the ophthalmic lens 1.

In addition, it can be seen that the second level of curing is higher than the first level of curing but it is lower than the third level of curing, the fourth level of curing. In addition, the second level of curing is higher than the fifth level of curing. The fifth level of curing is higher than the second level of curing. Typically, this fifth level of curing is selected to let the material flow around the component and avoid bubbles.

In the present disclosure, the fourth level of curing is higher than all the other levels of curing. Indeed, the fourth layer allows maintaining the different layers of the ophthalmic lens 1. This localized volume of the fourth material at this position (corresponding to a border of the different layers) with this high level of curing avoid leakage in the following steps and maintain the positioning of the different layers. Therefore, the value of this fourth level of curing is selected to obtain these physical and mechanical properties.

The third level of curing is higher than the first level of curing, the second level of curing, the fifth level of curing but lower than the fourth level of curing. In practice, this third level of curing is selected to have protective properties (level of hardness Thus, in the present disclosure, the fourth layer acts as a protective layer to protect the other layers and the electronic device 3 from damage. As the maintaining of the electronic device 3 and of the first layer 20, of the second layer 30 and of fifth layer 60 is provided by the fourth layer 50, the third level of curing can be selected to be lower than the fourth level of curing.

We therefore understand that the level of curing of the different layers is selected depending on the position of the given layer in the ophthalmic lens relative to the position of the electronic device 3. This especially applies when the first material, the second material and optionally the fifth material are similar.

For example, the first level of curing of the second level of curing and the fifth level of curing are selected to avoid damage of the electronic device 3 during the manufacturing process. Indeed, the third level of curing can be higher than the first level of curing and the second level of curing as the third layer 40 is further away from the electronic device 3 compared to the first layer 20 and the second layer 30. The fifth level of curing is lower than the second level of curing and the first level of curing because the material of this layer is the closest to the electronic device 3.

Of course, although figure 13 describes three different parameters of the level of curing, only one of these parameters can be used to define the level of curing of the different layers. In addition, it is also understood that other parameters (for instance those described above) can be used to define the level of curing of the different layers.

After the deposition of the first layer 20, the additive manufacturing device is configured to place the electronic device 3 in the cavity of the previous layer that has been deposited (here the total cavity formed by the first cavity and the second cavity).

In practice, the positioning of the electronic device 3 may be made manually by an operator or may be made automatically by using the movable arm 140 of the additive manufacturing system 100. Typically, the movable arm 140 may comprise a motor allowing to move the movable arm and a gripping means arranged to grip, to hold and to place the electronic device 3.

When the placing is carried out by the additive manufacturing system 100, it is understood that the movable arm 140 is controlled by the control unit 110 of the system 100. To this end, the additive manufacturing system 100 is configured to control the positioning of the electronic device 3 in the given cavity.

After the depositing of the electronic device 3 in the first and second cavities, the additive manufacturing system is configured to fill the cavity with the fifth material. To this end, the additive manufacturing system 100 is configured to determine a free volume in the first and second cavity and to deposit the fifth material in the first and second cavities to fill this free volume. In the present disclosure, the free volume corresponds to the total volume of the cavity subtracted from the volume of the electronic device 3. Therefore, to determine the free volume, the control unit 110 compares the volume of the total cavity (corresponding to the combination of the volume of the first and the second cavities) with the volume of the electronic device 3 using the model of the electronic device 3. Then, the control unit 110 is configured to determine a quantity of the fifth material to be deposited in the first cavity and in the second cavity based on the free volume previously determined.

After the depositing of the fifth material, the additive manufacturing system 100 is configured to cure this fifth material as explained above to a specific level of curing.

After the curing of the fifth material, the additive manufacturing system is configured to deposit the third layer of the third material and to cure, after the depositing, the third material as explained above.

In one embodiment, the additive manufacturing system 100 is further configured to arrange an initial layer (for instance an adhesive layer) on the substrate 10, before depositing the first layer 20.

### Process

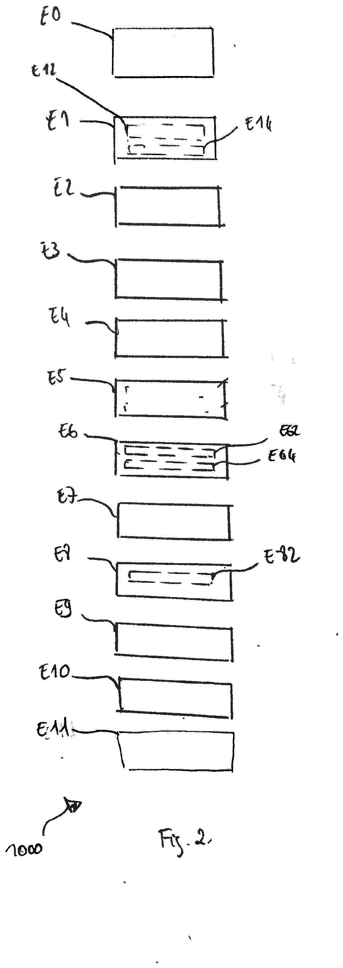

It will be described with figure 2 an embodiment of an additive manufacturing method 1000 for producing the ophthalmic lens 1 described above. In practice, the additive manufacturing method 1000 is implemented by the additive manufacturing system 100 described in the present disclosure. As it will be described below, the different steps of the additive manufacturing method 1000 may be implemented successively, in a specific order.

The additive manufacturing method 1000 illustrated in figure 2 first comprises a step of providing E0 the substrate 10. In practice, in this step of providing E0, the substrate is provided to the additive manufacturing system 100 described above.

Then, the additive manufacturing method 1000 comprises a first step of depositing E1, by the depositing device 120, the first layer 20 of a first material on a substrate 10. As explained above the first cavity shown in figure 3 and figure 4 comprises a first cavity 22. Thus, in the first step of depositing E1, the additive manufacturing system 1000 deposits the first layer 20 and forms the first cavity 22 during the deposition of the first material. In a preferred embodiment, the step of depositing the first layer 20 corresponds to a printing of the first material on the substrate 10 to form the first layer 20.

Thus, the first step of depositing E1 comprises, a step of determining E12, before the depositing of the first material on the substrate 10, the first 22 cavity of the first layer 20 and forming E14, during the deposition of the first material, the first cavity 22 as described above. It is understood that the step of forming E14 the first cavity corresponds to stop, during the deposition of the first material, the deposition of the first material at specific positions on substrate 10 to form the first cavity 22.

Typically here, the control unit 110 determines this first cavity 22 based on the electronic device 3 (for instance for its position and dimensions). Indeed, as illustrated on figure 6, the dimensions (here the width and the length) of the first cavity 22 projected in the facial plane are higher than the dimensions of the electronic device 3 defined in this plane. However, as shown in figure 5 (axial cut view), the electronic device 3 has a maximum height that is higher than the maxim heigh of the first cavity 22.

After the depositing of the first layer 20, the additive manufacturing method 1000 comprises a first step of curing E2, by the curing device 130, the first layer 20 to a first level of curing. This step happens successively after the first step of depositing E1. In practice, in this first step of curing E2, the curing device 130 emits an UV light toward the first layer 20 to expose the first layer 20 to this light during a time period corresponding to the curing time.

After the cure of the first layer 20, the additive manufacturing method 1000 comprises a step of placing E3 the electronic device 3 in the cavity of the first layer 20. The ophthalmic lens 1 described in this embodiment comprises a single electronic device 3. However, it is understood that this step of placing depends on the number of the electronic device 3 comprised in the ophthalmic lens 1. Thus, this step of placing may be reiterated depending on the number of electronical devices 3 comprised in the ophthalmic lens 1. Same applies to the step of forming the cavity. Figure 5 and figure 6 show an example of the ophthalmic lens 1 obtained at the end of the step of placing E3. It can be seen that the electronic device is arranged in the second part 22b of the second cavity. In addition, it can be seen that the dimensions of the second part of the cavity (projected in the facial plane) are higher than the dimensions of the electronic device 3.

After placing the electronic device 3 in the first cavity, the additive manufacturing method 1000 comprises (optional step) a second step of depositing E4 the fourth layer 50 by de depositing device 120. As shown in figures 7-8, the fourth layer is deposited between the edge 13 of the substrate 10 and the edge of the first layer 20 corresponding here to the external outline 21 of the first layer 20. When the depositing of the fourth layer 50 is finalized by the depositing device 120, the additive manufacturing method comprises a second step of curing E5, by the curing device 130, the fourth material to a fourth level of curing. As explained above, the fourth level of curing is higher than the second level of curing. Typically here, as shown in figure 13 the UV dose is higher than the UV dose of the first layer 20.

The additive manufacturing method 1000 further comprises a third step of depositing E6, by the depositing device 120, the second layer 30 on the first layer 20 described above. This step is carried out after the second step of curing E5. As shown in figure 9, the second layer 30 comprises a second cavity 32 that coincides with the first cavity 22. Thus, as for the first step of depositing E1, the additive manufacturing system 100 deposits the second layer 30, determines and forms the second cavity 32 during the deposition of the second material on the basis of (i.e. position, dimension) the first cavity of the first layer 20. Thus, at the end of the third step of depositing E6, the electronic device 3 is not covered by any layer.

It is understood that the third step of depositing E6 comprises a step of determining E62, before the depositing of the second material on the first layer, the second 32 cavity of the second layer 30 and forming E64, during the deposition of the second material, the second cavity as described above. Typically here, the control unit 110 determines this second cavity based on the first cavity 22 that has been formed previously (for instance for its position and dimensions) and on the electronic device 3. Indeed, as illustrated on figure 10, the combination of the first cavity and the second cavity has a maximal height that is higher than the maximum height of the electronic device 3.

Then, the additive manufacturing method 1000 comprises a third step of curing E7, by the curing device 130, the second layer 30 to a second level of curing. In this example, the second material of the second layer is cured to a second level of curing, that is lower than the fourth level of curing but higher than the first level of curing.

As there is a free volume in the first cavity 22 and in the second cavity 32, the additive manufacturing method 1000 is configured to fill this free volume. To this end, the additive manufacturing method 1000 comprises, after the cure of the second layer 30, a fourth step of depositing E8, by the depositing device 120, a fifth layer 60 of the fifth material in the free volume and a step of curing E9, by the curing device 130, the material of this layer to a fifth level of curing. To this end, the additive manufacturing method comprises a step of determining E82 a quantity of the fifth material deposited. Typically, this step can be implemented before the step of deposition of the first layer 20 or can be performed after the step of depositing the second layer described above. In practice, in this step of determining E82, the control unit 110 determines the quantity of the fifth material based on the volume of the first cavity 22, on the volume of the second cavity and on the volume of the electronic device 3 as described above.

The additive manufacturing method 1000 further comprises a fifth step of depositing E10, by the depositing device 120, the third material on the second layer and on the fifth layer and after the depositing, a step of curing E11, by the curing device 130, the third material to a third level of curing. Typically, this third level of curing is higher than the second level of curing but lower than the fourth level of curing. At the end the cure of the third material, the ophthalmic lens 1 is finalized.

## Claims

1. Additive manufacturing system for producing an ophthalmic lens encapsulating an electronic device, the additive manufacturing system being configured for:
- depositing at least one layer of a first material on a substrate, the at least one layer having at least one first cavity arranged to receive at least a part of the electronic device,
- curing the at least one layer of the first material to a first level of the curing,
- placing the electronic device in the at least one first cavity,
- depositing at least one layer of a second material on the at least one layer of the first material,
- curing the at least one layer of the second material to a second level of the curing, the second level of the curing being higher than the first level of the curing,
- depositing at least one layer of a third material on the at least one layer of the second material, the at least one layer of the third material covering the electronic device,
- curing the at least one layer of the third material to a third level of the curing, the third level of the curing being equal to or higher than the second level of the curing.

2. Additive manufacturing system according to claim 1, wherein the electronic device extends on less than 10% of an area of the substrate.

3. Additive manufacturing system according to claim 1 or 2 being further configured for:
- depositing at least one layer of a fourth material between an edge of the at least one layer of the first material and an edge of the substrate, the depositing being carried out before depositing the at least one layer of the second material,
- curing the fourth material to a fourth level of the curing, the fourth level of the curing being higher than the third level of the curing.

4. Additive manufacturing system according to claim 3, wherein the fourth material is deposited on at least one of the following layers:
- the substrate;
- the first layer at the edge;
said at least one layer of the fourth material has a shape of one of the following elements:
- a ring arranged around the extern edge of the at least one layer of the first material;
- or a shape of a frame dedicated for receiving the ophthalmic lens.

5. Additive manufacturing system according to any one of claims 1 to 4, wherein at least one of the following layers comprises a refractive power correction:
- the at least one layer of the first material,
- the at least one layer of the second material,
- the at least one layer of the third material,
- the substrate.

6. Additive manufacturing system according to any one of claims 1 to 5, wherein the at least one layer of the first material, the at least one layer of the second material and the at least one layer of the third material have a same index of refraction.

7. Additive manufacturing system according to any one of claims 1 to 6, wherein
- the first material comprises athermoset material,
- the second material comprises a thermoset material,
- the third material comprises a tthermoset material.

8. Additive manufacturing system according to any one of claims 1 to 7, wherein the at least one layer of the second material has at least one second cavity coinciding with the at least one first cavity and arranged to receive at least a part of the electronic device, the additive manufacturing system being further configured to:
- determine the volume of each cavity based on the dimension of the electronic device,
- forming the at least one first cavity during the depositing of the at least one layer of the first material and,
- forming the at least one second cavity during the depositing of the at least one layer of the second material.

9. Additive manufacturing system according to any one of claims 1 to 8 being further configured for:
- depositing a fifth material in the at least one first cavity, said fifth material filling a free volume between the electrical device and at least the at least one cavity, the depositing being carried out before depositing the at least one layer of the third curable material,
- curing the fifth material during a fifth level of the curing, the fifth level of the curing being lower than the second level of the curing.

10. Additive manufacturing system according to claim 9, wherein the additive manufacturing system being further configured for determining a quantity of the fifth material deposited based at least on the volume of the at least one first cavity and on the volume of the electronic device comprised in the at least one first cavity.

11. Additive manufacturing system according to any one of claims 1 to 10, wherein the electronic device comprises a passive component.

12. Additive manufacturing system according to claim 11, wherein the passive component comprises a sensor comprising at least one of the following sensors:
- a time-of-flight sensor;
- an eye-tracking device.

13. Additive manufacturing system according to claim 11 or 12, wherein the electronic device further comprises an active component comprising a solar cell configured to power the passive component.

14. Additive manufacturing system according to claim 11 or 12 being further configured for electrically connecting the electronic device to the edge of the substrate after placing the electronic device.

15. Additive manufacturing method for producing an ophthalmic lens encapsulating an electronic device, the additive manufacturing method comprising the following steps:
- depositing at least one layer of a first material on a substrate, the at least one layer having at least one first cavity arranged to receive at least a part of the electronic device,
- curing the at least one layer of the first material at a first level of curing,
- placing the electronic device in the at least one first cavity,
- depositing at least one layer of a second material on the at least one layer of the first material,
- curing the at least one layer of the second material at a second level of curing, the second level of curing being higher than the first level of curing,
- depositing at least one layer of a third material on the at least one layer of the second material, the at least one layer of the third material covering the electronic device,
- curing the at least one layer of the third material at a third level of curing, the third level of curing being equal to or higher than the second level of curing.
